# EUROPÄISCHE PATENTSCHRIFT

(11) **EP 2 147 338 B1**
(45) Veröffentlichungstag und Bekanntmachung des Hinweises auf die Patenterteilung: **08.07.2015**
(21) Anmeldenummer: 08749452.2
(22) Anmeldetag: 14.05.2008
(51) Int. Cl.: G01V 8/20, F16P 3/14

(54) **OPTOELEKTRONISCHER SENSOR ZUM ABSICHERN EINES GEFAHRENBEREICHS**
OPTOELECTRONIC SENSOR FOR SECURING A HAZARDOUS AREA
DÉTECTEUR OPTOÉLECTRONIQUE PERMETTANT DE SÉCURISER UNE ZONE DANGEREUSE

(30) Priorität: 15.05.2007 DE 102007024210
(43) Veröffentlichungstag der Anmeldung: 27.01.2010
(73) Patentinhaber: Pilz GmbH & Co. KG, 73760 Ostfildern (DE)
(72) Erfinder: SCHEIBER, Rudolf, CH-7320 Sargans (CH); LUISONI, Thomas, CH-7000 Chur (CH); BUX, Wolfgang, CH-7310 Bad Ragaz (CH); BRANDAUER, Kurt, CH-7304 Maienfeld (CH)
(74) Vertreter: Witte, Weller & Partner Patentanwälte mbB
(86) Internationale Anmeldenummer: PCT/EP2008/003858
(87) Internationale Veröffentlichungsnummer: WO 2008/138598

(56) Entgegenhaltungen:
- EP-A- 1 260 950
- WO-A-01/69582
- DE-A1- 10 120 940
- DE-U1-202005 010 358
- US-A- 4 650 990
- US-A1- 2007 069 114

## Beschreibung

Die vorliegende Erfindung betrifft einen optoelektronischen Sensor zum Absichern eines Gefahrenbereichs, insbesondere ein Lichtgitter, mit einem ersten und einem zweiten Sensorteil, die mit einem räumlichen Abstand zueinander angeordnet sind, wobei jeder Sensorteil eine Vielzahl von Sendeelementen zum Erzeugen von Sendestrahlen und eine Vielzahl von Empfangselementen zum Empfangen der Sendestrahlen aufweist, so dass eine Vielzahl von gegenläufigen Sendestrahlen zwischen den Sensorteilen gebildet wird.

Ein solcher Sensor ist beispielsweise aus EP 1 615 053 A1 und US 4650990 A1 bekannt.

Die Erfindung betrifft ganz allgemein das Gebiet der Sicherheitstechnik im Sinne von Schutz von Personen und/oder materiellen Werten vor Gefahren, die von automatisiert arbeitenden Anlagen oder Maschinen ausgehen, wie z.B. von automatisiert arbeitenden Robotern. Eine typische Schutzmaßnahme besteht darin, den Gefahrenbereich einer solchen Anlage abzusperren, so dass ein Betreten des Gefahrenbereichs entweder verhindert wird oder zum Anhalten, zum Abschalten oder anderweitigen Entschärfen der gefährlichen Betriebssituation führt. Zum Absperren eines solchen Gefahrenbereichs werden häufig mechanische Schutzzäune oder Schutztüren verwendet. In vielen Fällen ist jedoch ein Zugang in den abgesicherten Gefahrenbereich notwendig, sei es weil eine Bedienperson regelmäßig Zugang zu der Maschine benötigt und/oder weil Material in den oder aus dem Gefahrenbereich transportiert werden muss. Für solche Fälle werden häufig optoelektronische Schutzeinrichtungen eingesetzt, insbesondere Lichtschranken, Lichtgitter oder Lichtvorhänge. Solche optoelektronischen Sensoren erzeugen einen oder mehrere Sendestrahlen, die mit einem oder mehreren Empfangselementen detektiert werden. Wird ein Sendestrahl beispielsweise von einem Körperteil einer Person unterbrochen, kann diese Unterbrechung mit Hilfe der Empfangselemente erkannt werden und die abgesicherte Anlage kann angehalten oder abgeschaltet werden.

Für solche Anwendungsfälle ist es wichtig, dass die Schutzfunktion, die mit Hilfe des optoelektronischen Sensors erreicht wird, auch dann erhalten bleibt, wenn der Sensor einen Funktionsfehler aufweist oder aus anderen Gründen nicht in der Lage ist, das Eindringen eines Objekts in den Gefahrenbereich zu detektieren und zu melden. Daher unterliegen Sensoren für solche Anwendungsfälle speziellen Anforderungen, die insbesondere in den europäischen Normen EN 954-1 und EN ISO 13849-1 definiert sind. Aufgrund dieser speziellen Anforderungen unterscheidet sich ein Sensor für die oben beschriebenen Anwendungen in der Regel von optoelektronischen Sensoren für andere, nicht-sicherheitsrelevante Anwendungen. Wenngleich die vorliegende Erfindung prinzipiell auch bei nicht-sicherheitsrelevanten Anwendungen eingesetzt werden kann, bezieht sie sich in erster Linie auf einen optoelektronischen Sensor, der zumindest die Anforderungen der Kategorie 3 der oben erwähnten Norm EN 954-1 oder vergleichbare Anforderungen in Bezug auf die Eigenfehlersicherheit erfüllt.

Typischerweise besitzen Lichtschranken, Lichtgitter und ähnliche Sensoren einen Sendeteil, der die Sendestrahlen erzeugt, und einen Empfangsteil, der zum Detektieren der Sendestrahlen dient. In vielen Fällen verlaufen die Sendestrahlen parallel und in gleicher Richtung vom Sender zum Empfänger. Es gibt jedoch auch Konzepte mit gegenläufigen Sendestrahlen zwischen den beiden Sensorteilen, wobei es sich in diesen Fällen in aller Regel um Reflexionslichtschranken handelt, bei denen ein Umlenkspiegel in einem der Sensorteile dazu verwendet werden, zu einem hinlaufenden Sendestrahl einen rücklaufenden Sendestrahl zu erzeugen. Ein Reflexionslichtgitter mit solchen gegenläufigen Sendestrahlen ist beispielsweise aus DE 20 2005 010 358 U1 bekannt. Reflexionslichtschranken und -lichtgitter besitzen den Vorteil, dass lediglich der eine Sensorteil aktive Elemente enthalten muss, während der andere Sensorteil passiv ausgebildet sein kann. Daher können Kabelanschlüsse an dem einen aktiven Sensorteil konzentriert werden.

Aus der eingangs genannten EP 1 615 053 A1 ist ein Lichtgitter mit einem modularen Aufbau bekannt, das in beiden Sensorteilen eine Vielzahl von Sende- und Empfangsmodulen besitzt, wobei sich jeweils ein Sende- und Empfangsmodul aus jedem Sensorteil so gegenüberstehen, dass der Sendestrahl des einen Moduls mit dem Empfangselement des anderen Moduls detektiert werden kann. Diese Anordnung wird insbesondere vorgeschlagen, um variabel auf externe Lichteinflüsse reagieren zu können. Je nach Standort einer störenden externen Lichtquelle werden nur diejenigen Sendestrahlen verwendet, die entgegen der externen Lichtquelle verlaufen. Eine Blendung der Empfangselemente durch die externe Lichtquelle wird so ausgeschlossen. Wie es im Stand der Technik üblich ist, schlägt EP 1 615 053 A1 vor, die Vielzahl der Sende- und Empfangsmodule aus jedem Sensorteil jeweils seriell an eine zentrale Auswerte- und Steuereinheit anzuschließen.

DE 101 20 940 A1 schlägt einen optoelektronischen Sensor in Form eines Lichtvorhangs vor, bei dem einzelne Lichtgittermodule jeweils seriell zu einem ersten und einem zweiten Sensorteil verbunden werden. Die beiden Sensorteile sind wie bei dem Lichtgitter aus EP 1 615 053 A1 mit einer externen Auswerte- und Steuereinheit verbunden. Jedes Lichtgittermodul erzeugt eine Vielzahl von parallelen, gleichlaufenden Sendestrahlen. Allerdings sind die jeweils benachbarten Lichtgittermodule so kombiniert, dass sich insgesamt gegenläufige Gruppen von Sendestrahlen ergeben. Auf diese Weise wird nach DE 101 20 940 A1 erreicht, dass sich die benachbarten Lichtgittermodule optisch nicht beeinflussen.

Die bislang bekannten Konzepte für solche optoelektronischen Sensoren besitzen den Nachteil, dass die Reaktionszeit des Sensors in der Regel linear mit der Anzahl der verwendeten Sendestrahlen ansteigt. Ein Lichtgitter oder ein Lichtvorhang mit einer großen Anzahl von Sendestrahlen besitzt daher in aller Regel eine längere Reaktionszeit als ein Lichtgitter mit wenigen Sendestrahlen. Die Reaktionszeit des Sensors ist eine wichtige Größe, weil sie den Abstand bestimmt, in dem der Sensor vor der abzusichernden Anlage angeordnet werden muss. Ein großer Abstand erzwingt einen großen Bauraum, was aus Platz- und Kostengründen von Nachteil ist. Kürzere Reaktionszeiten wären durch eine geringere Anzahl an Sendestrahlen möglich. Dies hätte jedoch eine Reduzierung der Auflösung zur Folge, was in ungünstigen Fällen dazu führen könnte, dass ein Körperteil unerkannt durch den optisch überwachten Bereich des Sensors hindurchgreifen kann.

Darüber hinaus sind die bislang bekannten Konzepte für optoelektronische Sensoren der eingangs genannten Art relativ teuer, wenn eine Vielzahl von Varianten für unterschiedliche Schutzfeldhöhen, Auflösungen und/oder Reaktionszeiten bereitgestellt werden soll.

Vor diesem Hintergrund ist es eine Aufgabe der vorliegenden Erfindung, einen optoelektronischen Sensor der eingangs genannten Art anzugeben, der eine sehr kostengünstige Realisierung in verschiedenen Ausbaustufen ermöglicht. Außerdem sollen möglichst kurze Reaktionszeiten auch bei großen Schutzfeldern erreichbar sein.

Gemäß einem Aspekt der vorliegenden Erfindung wird diese Aufgabe durch einen optoelektronischen Sensor der eingangs genannten Art gelöst, bei dem jeder Sensorteil zumindest einen Auswerteschaltkreis aufweist, der mit den Empfangselementen des jeweiligen Sensorteils gekoppelt ist, wobei jeder Auswerteschaltkreis dazu ausgebildet ist, ein Abschaltsignal in Abhängigkeit von den jeweils angekoppelten Empfangselementen zu erzeugen.

Der neue Sensor verwendet also für die Auswertung der Empfangselemente eine Vielzahl von Auswerteschaltkreisen, wobei in jedem Sensorteil zumindest ein Auswerteschaltkreis angeordnet ist. Jeder Auswerteschaltkreis ist mit einer Vielzahl von Empfangselementen des jeweiligen Sensorteils gekoppelt. In einem Ausführungsbeispiel ist derzeit vorgesehen, dass jeder Auswerteschaltkreis fünf oder sechs Empfangselemente auswertet. Prinzipiell kann jedoch auch eine größere oder kleinere Anzahl von Empfangselementen mit jedem Auswerteschaltkreis gekoppelt sein.

Bei dem neuen Sensor sind die Empfangselemente gruppenweise parallel an den jeweiligen Auswerteschaltkreis gekoppelt. Dies ermöglicht eine schnellere Reaktionszeit als bei herkömmlichen Konzepten, bei denen alle Empfangselemente zeitlich nacheinander ausgewertet werden. Die Reaktionszeit ist hier verkürzt, weil in jedem Sensorteil ein oder mehrere Auswerteschaltkreise verwendet sind und die Vielzahl der Auswerteschaltkreise parallel zueinander arbeiten können.

Des weiteren wird durch die Verwendung von gegenläufigen Sendestrahlen in Verbindung mit den Auswerteschaltkreisen in den beiden Sensorteilen ein modulartiger Aufbau ermöglicht, der es erlaubt, die beiden Sensorteile nahezu oder sogar vollkommen identisch zu realisieren. Etwaige Unterschiede können sich auf wenige und vorteilhafterweise sogar allein in der Software realisierte Merkmale beschränken, wie etwa die Möglichkeit, einen der Sensorteile als Master und den anderen Sensorteil als Slave zu konfigurieren. Eine solche Konfiguration erleichtert die Synchronisierung der beiden Sensorteile bei im Übrigen gleich aufgebauten Sensorteilen. Die weitgehende Identität der Module ermöglicht durch erhöhte Stückzahlen und die flexiblen Verwendungsmöglichkeiten eine kostengünstige Produktion und Lagerhaltung.

Die oben genannte Aufgabe ist daher vollständig gelöst.

In einer bevorzugten Ausgestaltung ist der zumindest eine Auswerteschaltkreis in jedem Sensorteil ferner mit den Sendeelementen des jeweiligen Sensorteils gekoppelt, um das Aussenden der Sendestrahlen zu steuern.

In dieser Ausgestaltung ist der zumindest eine Auswerteschaltkreis in jedem Sensorteil streng genommen nicht nur ein Auswerteschaltkreis, sondern auch ein Steuerschaltkreis. Die Ausgestaltung besitzt den Vorteil, dass jeder Sensorteil autark arbeiten kann. Dies vereinfacht die vorteilhafte Gleichheit der Sensorteile und trägt zu einer weiteren Reduzierung der Produktions- und Lagerkosten bei.

In einer weiteren Ausgestaltung ist jeder Sensorteil dazu ausgebildet, modulierte Sendestrahlen zu erzeugen, wobei die modulierten Sendestrahlen eine optische Kommunikationsstrecke zur Synchronisation zwischen den Sensorteilen bilden.

In einem vorteilhaften Ausführungsbeispiel werden die Sendestrahlen jeweils mit einer Puls-Code-Modulation ausgesendet. Alternativ oder ergänzend hierzu können prinzipiell auch andere digitale oder analoge Modulationsverfahren zur Anwendung kommen. Die Verwendung von modulierten Sendestrahlen ermöglicht eine sehr einfache und schnelle Synchronisation der Sensorteile. Außerdem lässt sich die optische Kommunikationsstrecke in bevorzugten Ausführungsbeispielen dazu verwendet, Informationen zwischen den Auswerteschaltkreisen in den gegenüberliegenden Sensorteilen auszutauschen. Dies kann vorteilhaft dazu verwendet werden, die Sensorteile adaptiv aneinander anzupassen. Des Weiteren lassen sich mit Hilfe der modulierten Sendestrahlen Lichtreflexe, Fremdlichtquellen und andere Störungen aus dem Umfeld von dem Sendestrahlen unterscheiden, was die Wahrscheinlichkeit von Fehldetektionen und Detektionslücken durch "Blindheit" reduziert.

In einer weiteren Ausgestaltung weist jeder Sensorteil eine gerade Anzahl an Sendelemente und eine gerade Anzahl an Empfangselementen auf, die abwechselnd nebeneinander angeordnet sind, wobei jedem Empfangselement genau ein Sendelement gegenüberliegt.

In dieser Ausgestaltung besitzt jeder Sensorteil eine gerade Anzahl an Sende- und Empfangselementen, die einzeln oder in gleichzahligen Gruppen abwechselnd nebeneinander angeordnet sind. In einem bevorzugten Ausführungsbeispiel liegt jeweils ein Empfangselement zwischen zwei benachbarten Sendelementen und umgekehrt, abgesehen von dem ersten und letzten Element der Reihe, die jeweils nur einen Nachbarn haben. In anderen Ausführungsbeispielen können sich allerdings auch zwei oder mehr Sendelemente mit zwei oder mehr Empfangselementen (jeweils gleiche Anzahl) abwechseln. Die Ausgestaltung besitzt den Vorteil, dass identische Module in den beiden Sensorteilen verwendet werden können, indem man eines der Module "auf dem Kopf" montiert. Auf diese Weise steht jedem Sendeelement ein Empfangselement gegenüber und umgekehrt, und es muss nur ein einziger Modultyp hergestellt werden.

In einer weiteren Ausgestaltung besitzt der optoelektronische Sensor zumindest eine Steuereinheit, die mit den Auswerteschaltkreisen verbunden ist, wobei die Steuereinheit in Abhängigkeit von dem Abschaltsignal ein redundantes Freigabesignal erzeugt.

In dieser Ausgestaltung dienen die Auswerteschaltkreise in erster Linie dazu, die Empfangselemente auszuwerten und ggf. die Sendeelemente anzusteuern. Ein Freigabesignal (typischerweise als OSSD-Signal bezeichnet), das die Anforderungen an einen Sensor für sicherheitsrelevante Anwendungen erfüllt, wird demgegenüber mit der Steuereinheit erzeugt. Durch diese Verteilung der Zuständigkeiten können die Auswerteschaltkreise sehr einfach und kostengünstig realisiert werden, was vor allem bei Lichtgittern und Lichtvorhängen mit einer großen Anzahl an Sendestrahlen von Vorteil ist. In bevorzugten Ausführungsbeispielen besitzt die Steuereinheit eine Vielzahl von externen Anschlüssen, wie zum Beispiel für einen Reset- oder Starttaster, die Einstellung von Betriebsarten, den Anschluss von kontaktbehafteten Meldegeräten, wie Not-Aus-Tastern oder Schutztüren, den Anschluss von Mutingsensoren und/oder Mutinglampen oder als Diagnoseschnittstelle.

In einer weiteren Ausgestaltung weist die Steuereinheit einen ersten und einen zweiten Kanal auf, wobei der ersten Kanal in dem ersten Sensorteil angeordnet ist, und wobei der zweite Kanal in dem zweiten Sensorteil angeordnet ist. In bevorzugten Ausführungsbeispielen besitzt der Sensor außerdem eine Kommunikationsverbindung zwischen den beiden Kanälen der Steuereinheit. Die Kommunikationsverbindung kann drahtlos mit Hilfe von Funk oder Infrarot oder als Kabelverbindung realisiert sein.

Diese Ausgestaltung ermöglicht einen sehr einfachen und kostengünstigen Aufbau, weil die beiden Sensorteile einschließlich der Steuereinheit weitgehend identisch realisiert werden können. Darüber hinaus vereinfacht eine in den Sensorteilen angeordnete Steuereinheit den Installationsaufwand an der abzusichernden Anlage. Außerdem trägt die Aufteilung der Kanäle auf die beiden getrennten Sensorteile dazu bei, die Wahrscheinlichkeit von zeitgleichen Fehlern in den Kanälen der Steuereinheit zu reduzieren.

In einer weiteren Ausgestaltung ist die Steuereinheit separat von dem ersten und dem zweiten Sensorteil angeordnet.

In dieser Ausgestaltung ist die Steuereinheit räumlich getrennt von den Sensorteilen als externe Steuereinheit für die beiden Sensorteile realisiert. Diese Ausgestaltung ist für "intelligente" Sensoren von Vorteil, die über zahlreiche Anschlussmöglichkeiten und/oder umfassende Auswerteeigenschaften verfügen, weil die Steuereinheit in diesem Fall nicht auf den geringen Bauraum innerhalb der Sensorteile begrenzt ist. In einem bevorzugten Ausführungsbeispiel, das sich mit dieser Ausgestaltung gut realisieren lässt, ist die Steuereinheit dazu ausgebildet, Objekte, die durch das Schutzfeld hindurchtreten, anhand der zeitlichen Abfolge und Dauer der einzelnen Strahlunterbrechungen zu klassifizieren und/oder zu identifizieren. Damit ist sogar eine dreidimensionale Objekterkennung möglich.

In einer weiteren Ausgestaltung weist jeder Sensorteil eine Vielzahl von Auswerteschaltkreisen auf, wobei ein erster Auswerteschaltkreis mit einer ersten Anzahl der Empfangselemente gekoppelt ist, und wobei einer weiterer Auswerteschaltkreis mit einer weiteren Anzahl der Empfangselemente gekoppelt ist.

In dieser Ausgestaltung besitzt jeder Sensorteil eine Vielzahl von - vorzugsweise identischen - Sende-/Empfangsmodulen, wobei jedes Modul eine Vielzahl von Sendestrahlen erzeugt und auswertet. Mit dieser Ausgestaltung lassen sich Sensoren mit großen Schutzfeldern auf sehr kostengünstige Weise realisieren.

In einer weiteren Ausgestaltung sind der erste und der weitere Auswerteschaltkreis in jedem Sensorteil über eine erste Leitungsverbindung miteinander gekoppelt, um eine Serienanordnung von Auswerteschaltkreisen zu bilden, wobei die Serienanordnung einen Ausgang aufweist, an dem das Abschaltsignal in Abhängigkeit von allen Empfangselementen bereitgestellt wird, die an die angekoppelt sind.

Die Serienanordnung zeichnet sich dadurch aus, dass sie ein gemeinsames Abschaltsignal in Abhängigkeit von allen Empfangselementen bereitstellt, die an die Serienanordnung angekoppelt sind. Anders ausgedrückt erzeugt die Serienanordnung eine logische ODER-Verknüpfung der Abschaltsignale aus den gekoppelten Auswerteschaltkreisen. Wenn auch nur von einem Auswerteschaltkreis ein Abschaltsignal vorliegt, wird das gemeinsame Abschaltsignal erzeugt (logische ODER-Verknüpfung). Diese Ausgestaltung ermöglicht eine sehr einfache, kostengünstige und schnelle "Zusammenführung" der Ergebnisse aus den einzelnen Auswerteschaltkreisen.

In einem bevorzugten Ausführungsbeispiel sind die Auswerteschaltkreise in jedem Sensorteil so miteinander gekoppelt, dass ein Ausgang eines ersten Auswerteschaltkreises mit einem Eingang eines nachfolgenden Auswerteschaltkreises verbunden ist. In diesem Fall wird ein Freigabesignal, beispielsweise ein 24 Volt Signal oder ein definiertes Taktsignal, seriell von einem Auswerteschaltkreis der Serienanordnung zum nächsten übermittelt. Im Betrieb repräsentiert ein Wegfall des jeweils weitergegebenen Freigabesignals das gemeinsame Abschaltsignal aller vorhergehenden Auswerteschaltkreise. Mit einer solchen Serienanordnung kann die zeitkritische Abschaltinformation (in Form des Freigabesignals, also mit umgekehrter Logik) sehr schnell an die Steuereinheit übertragen werden. Darüber hinaus ermöglicht eine solche Serienanordnung eine einfache Konfiguration der Sensorteile nach dem Einschalten. Vorteilhaft wird die tatsächliche Anzahl der vorhandenen Auswerteschaltkreise nämlich automatisch bestimmt, indem ein Zählwort von einem Auswerteschaltkreis der Serienanordnung zum nächsten weitergeben und dabei inkrementiert wird. In einem besonders bevorzugten Ausführungsbeispiel erfolgt außerdem eine automatische Adressvergabe an die Auswerteschaltkreise in Abhängigkeit von dem jeweiligen Stand des Zählwortes. In anderen bevorzugten Ausführungsbeispielen kann die Serienanordnung dadurch realisiert sein, dass die Auswerteschalkreise eines Sensorteils mit jeweils einem Ausgang an eine gemeinsame Freigabeleitung angeschlossen sind, die von jedem Auswerteschaltkreis auf ein definiertes Potential, insbesondere Masse, gezogen werden kann ("verdrahtetes ODER"). Nur wenn kein Auswerteschaltkreis die gemeinsame Freigabeleitung auf das definierte Potential zieht, kann die Freigabeleitung ein definiertes Freigabesignal führen. Auch hier repräsentiert das Freigabesignal die zeitkritische Abschaltinformation in umgekehrter Logik. Die zeitkritische Abschaltinformation kann so besonders einfach und schnell an eine Steuereinheit übertragen werden. Es entfällt in diesem Fall jedoch die vorteilhafte Möglichkeit einer automatischen Zählung der vorhandenen Auswerteschaltkreise anhand der Serienanordnung.

In einer weiteren Ausgestaltung sind die Vielzahl der Auswerteschaltkreise an eine gemeinsame Busdatenverbindung angeschlossen, die mit der Steuereinheit verbunden ist.

Diese Ausgestaltung ist von Vorteil, um viele Detailinformationen aus den einzelnen Auswerteschaltkreisen effizient und kostengünstig an die Steuereinheit zu übertragen. Detailinformationen können insbesondere Angaben darüber enthalten, welche Sendestrahlen zu welchem Zeitpunkt und wie lange unterbrochen wurden. Anhand solcher Informationen kann die Steuereinheit beispielsweise ein Objekt klassifizieren, dass die Sendestrahlen durchbricht. Damit kann die Steuereinheit eine Blankingfunktion realisieren, die es ermöglicht, klassifizierte Objekte, wie zum Beispiel definierte Werkstücke, durch das Schutzfeld des Sensors zu transportieren, ohne dass die abgesicherte Anlage abgeschaltet werden muss. In der besonders bevorzugten Ausgestaltung kombiniert der neue Sensor die oben beschriebene Serienanordnung und eine parallele Ankopplung der Auswerteschaltkreisen an die gemeinsame Busdatenverbindung zur Steuereinheit, um sowohl eine effiziente Detailauswertung als auch eine sehr kurze Reaktionszeit zu ermöglichen. Außerdem wird so eine interne diversitäre Redundanz geschaffen, was im Hinblick auf die Fehlersicherheit des Sensors von großem Vorteil ist. In einem besonders bevorzugten Ausführungsbeispiel ist die Busdatenverbindung ein I²C-Bus mit einer gemeinsamen Taktleitung und einer gemeinsamen Datenleitung, auf der die Detailinformationen taktsynchron zur Taktleitung übertragen werden.

In einer weiteren Ausgestaltung ist jeder Sensorteil dazu ausgebildet, die Sendestrahlen zumindest abschnittsweise sequentiell zu erzeugen.

Abschnittsweise sequentiell bedeutet hier, dass die Sendestrahlen in einem Abschnitt des Sensors zeitlich nacheinander und einander ausschließend erzeugt werden. Vorteilhafterweise wird ein Abschnitt durch jeweils ein Sende-Empfangsmodul mit Auswerteschaltkreis und daran angeschlossenen Sende- und Empfangselementen gebildet. Die sequentielle Erzeugung der Sendestrahlen innerhalb eines solchen Abschnitts trägt dazu bei, ein unerkanntes Übersprechen zwischen den einzelnen Sendestrahlen zu vermeiden. Außerdem kann mit dieser Ausgestaltung ein sehr einfaches und effizientes Kommunikationsprotokoll zwischen den beiden Sensorteilen realisiert werden, dass die Synchronisation der Sensorteile erleichtert.

In einer weiteren Ausgestaltung ist jeder Sensorteil dazu ausgebildet, einen empfangenen Sendestrahl mit Hilfe eines eigenen modulierten Sendestrahls zu quittieren.

In dieser Ausgestaltung sendet jeder Sensorteil einen Sendestrahl mit einer modulierten Information, sobald er einen Sendestrahl des jeweils anderen Sensorteils empfangen hat. Der "Antwort-Sendestrahl" dient nicht nur als Sendestrahl zum Überwachen des Schutzfeldes, sondern auch als Quittungssignal für den anderen Sensorteil. In bevorzugten Ausführungsbeispielen signalisiert das Quittungssignal, dass der zunächst empfangende Sensorteil den modulierten Sendestrahl des zunächst sendenden Sensorteils mit hinreichender Signalstärke empfangen und fehlerfrei demodulieren konnte. Alternativ oder ergänzend dazu kann das Quittungssignal auch eine Wiederholungsanforderung sein, die dem sendenden Sensorteil signalisiert, dass der vorhergehende Sendestrahl nicht erfolgreich demoduliert bzw. erkannt werden konnte. Diese Ausgestaltung trägt vorteilhaft dazu bei, die Fehlertoleranz des neuen Sensors zu erhöhen und Fehlalarme zu vermeiden.

In einer weiteren Ausgestaltung weisen die Sendeelemente eine variable Sendeleistung mit einem Leistungsminimum und einem Leistungsmaximum auf, wobei jeder Sensorteil dazu ausgebildet ist, die Sendeleistung der Sendeelemente schrittweise zwischen dem Leistungsminimum und dem Leistungsmaximum zu verändern.

Diese Ausgestaltung ist sehr vorteilhaft, weil sie eine adaptive Einstellung der Sendeleistung der einzelnen Sendeelemente ermöglicht. In einem Ausführungsbeispiel wird die Sendeleistung der Sendeelemente vom Leistungsminimum beginnend schrittweise erhöht, bis die Empfangselemente des jeweils anderen Sensorteils die Sendestrahlen ohne Datenfehler empfangen und demodulieren können. Die Ausgestaltung ermöglicht es, auf eine teure Selektion der Sendeelemente zu verzichten. Außerdem wird durch die Optimierung der Sendeleistung das Risiko von Übersprechen reduziert und die Lebensdauer der Sendeelemente wird erhöht. Von Vorteil ist es außerdem, wenn die adaptive Einstellung der Sendeleistung zyklisch wiederholt wird, beispielsweise bei jedem Einschalten der Sensors, weil auf diese Weise Alterungserscheinungen und/oder Verschmutzungseffekte kompensiert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1:: eine automatisiert arbeitende Anlage mit einem Ausführungsbeispiel des neuen Sensors,
- Fig. 2:: den optischen Sensor aus Fig. 1 in Details, und
- Fig. 3:: ein weiteres Ausführungsbeispiel für den neuen optischen Sensor.

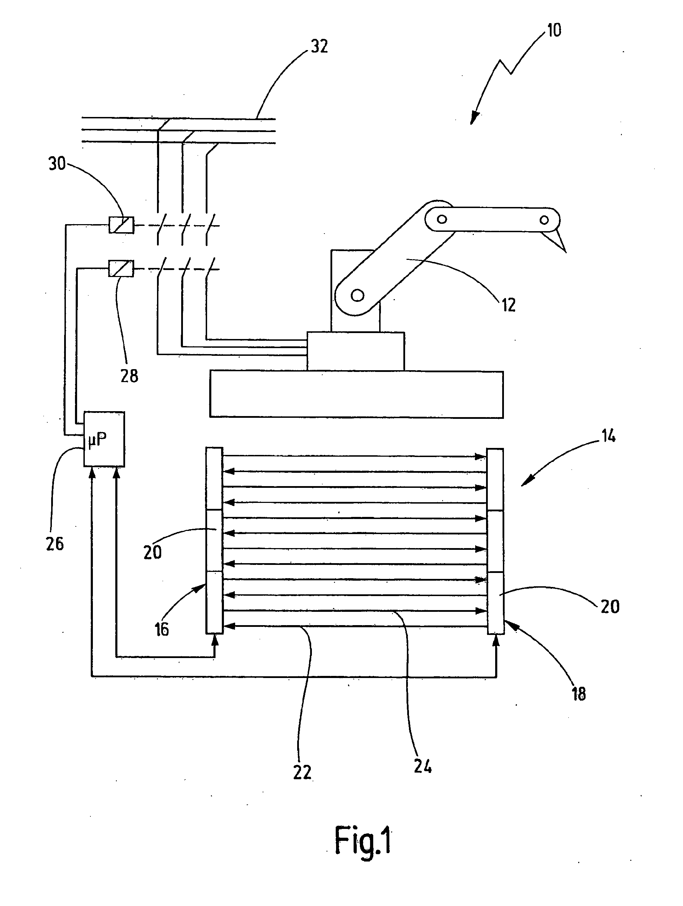

In Fig. 1 ist eine Vorrichtung mit einem Ausführungsbeispiel des neuen Sensors in ihrer Gesamtheit mit der Bezugsziffer 10 bezeichnet. Die Vorrichtung 10 beinhaltet hier einen Roboter 12, dessen Bewegungsbereich einen Gefahrenbereich für Personen darstellt. Dieser Gefahrenbereich wird hier mit Hilfe des neuen Sensors 14 abgesichert.

Der Sensor 14 besitzt einen ersten Sensorteil 16 und einen zweiten Sensorteil 18, die in einem räumlichen Abstand zueinander angeordnet sind. Jeder Sensorteil 16, 18 besteht hier aus drei Modulen 20, die in dem dargestellten Ausführungsbeispiel jeweils identisch aufgebaut sind. Jedes Modul 20 erzeugt eine Anzahl von Sendestrahlen 22, 24, die zumindest annähernd parallel zueinander zwischen den beiden Sensorteilen 16, 18 verlaufen. Die Sendestrahlen 22, 24 bilden ein optisch überwachtes Schutzfeld, mit dessen Hilfe das Eindringen einer Person oder eines Gegenstandes in den abgesicherten Gefahrenbereich detektiert werden kann.

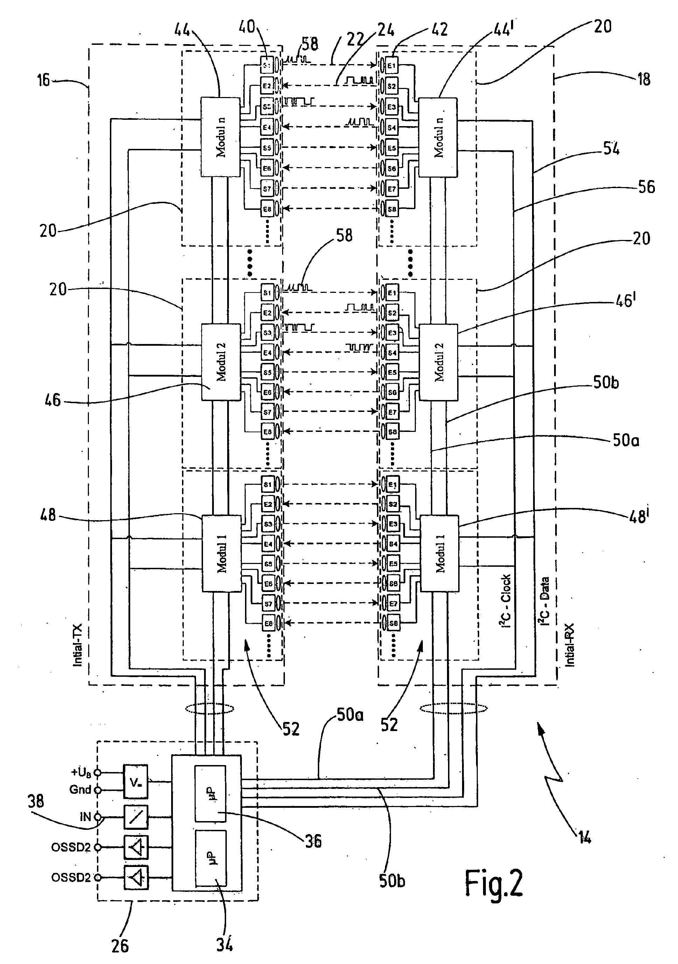

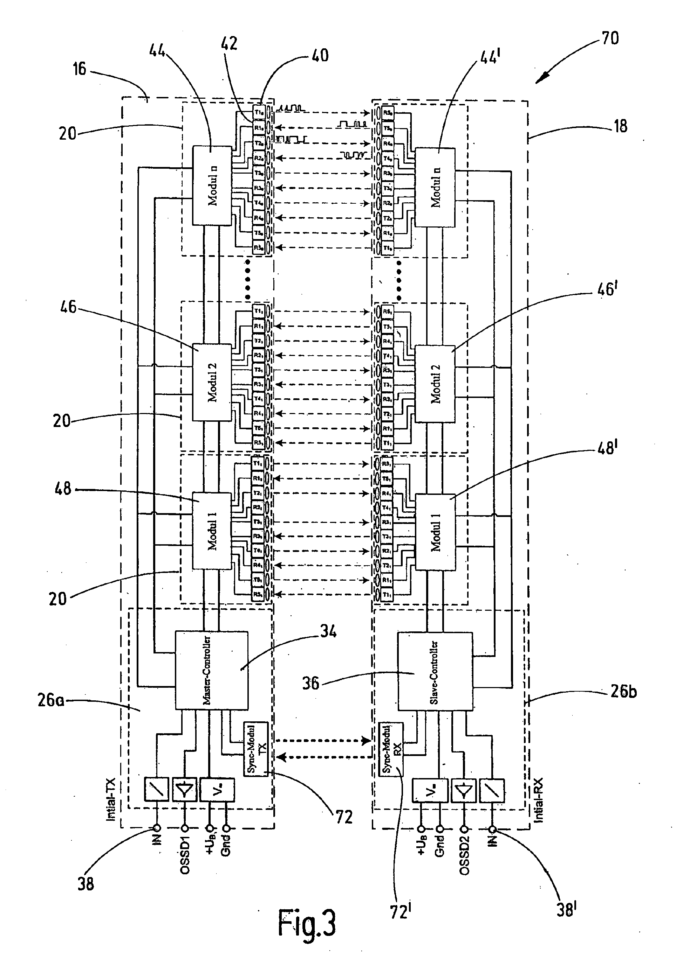

Gemäß einem Aspekt des neuen Sensors wird das optisch überwachte Schutzfeld hier von gegenläufigen Sendestrahlen 22, 24 gebildet, was nachfolgend anhand der Fig. 2 und 3 noch im Detail erläutert wird.

Mit der Bezugsziffer 26 ist eine Steuereinheit bezeichnet, die hier mit jedem der beiden Sensorteile 16, 18 verbunden ist. Die Steuereinheit 26 erzeugt in Abhängigkeit von den Signalen der Sensorteile 16, 18 ein zweikanaliges, redundantes Freigabesignal, das hier dazu verwendet wird, zwei Schütze 28, 30 anzusteuern. Die Schütze 28, 30 besitzen Arbeitskontakte, die nur bei Vorliegen des Freigabesignals geschlossen sind (normally open). Die Arbeitskontakte der Schütze 28, 30 liegen seriell zwischen einer Betriebsspannung 32 und den Antrieben des Roboters 12. Dementsprechend kann der Roboter 12 nur betrieben werden, wenn das Freigabesignal der Steuereinheit 26 vorliegt.

In Fig. 2 sind weitere Details des neuen Sensors 14 mit der Steuereinheit 26 dargestellt. Gleiche Bezugszeichen bezeichnen dieselben Elemente wie zuvor.

Die Steuereinheit 26 ist hier zweikanalig-redundant aufgebaut, d.h. sie besitzt zwei Kanäle, die hier vereinfacht anhand von zwei redundanten Mikroprozessoren 34, 36 dargestellt sind. Die beiden Mikroprozessoren 34, 36 verarbeiten die Signale von den Sensorteilen 16, 18 redundant zueinander, und sie erzeugen zusammen das zweikanalige Freigabesignal an den Ausgängen OSSD. Außerdem besitzt die Steuereinheit 26 eine Anzahl von Eingängen, von denen hier der Einfachheit halber nur ein Eingang 38 dargestellt ist. Die Eingänge 38 können insbesondere zum Anschluss von kontaktbehafteten Meldegeräten, wie Not-Aus-Tastern oder Schutztürschaltern, und für eine Schützüberwachung (EDM) ausgebildet sein. Des Weiteren sind in einem bevorzugten Ausführungsbeispiel Eingänge zum Anschluss eines Starttasters, Eingänge zum Anschluss von Mutingsensoren sowie eine Diagnoseschnittstelle vorhanden. In weiteren Ausführungsbeispielen beinhalten die Eingänge einen Feldbus- oder Netzwerkanschluss und/oder einen Eingang zum Konfigurieren der Betriebsarten des Sensors 14.

Die Module 20 der beiden Sensorteile 16 und 18 sind jeweils identisch aufgebaut. Jedes Modul 20 besitzt eine Vielzahl von Sendeelementen und eine Vielzahl von Empfangselementen, wobei hier aus Gründen der Übersichtlichkeit lediglich ein Sendeelement 40 und eine Empfangselement 42 bezeichnet sind. Des Weiteren besitzt jedes Modul 20 einen Auswerteschaltkreis 44, 46, 48, der in bevorzugten Ausführungsbeispielen mit Hilfe eines Mikrocontrollers, alternativ mit Hilfe eines ASIC und/oder FPGA realisiert ist. In einigen bevorzugten Ausführungsbeispielen sind die Auswerteschaltkreise 44, 46, 48 zweikanalig realisiert, d.h. jeder Auswerteschaltkreis 44, 46, 48 beinhaltet redundante Mikrocontroller, ASICs, FPGAs oder dergleichen. Des weiteren können die Mikroprozessoren 34, 36 in manchen Ausführungsbeispielen die Funktion des nächstliegenden Auswerteschaltkreises 48 übernehmen, wobei in diesen Fällen die entsprechenden Sende- und Empfangselemente an die Mikroprozessoren 34, 36 angeschlossen sein müssen.

Die Sendeelemente 40 und Empfangselemente 42 sind in jedem Modul 20 abwechselnd nebeneinander angeordnet, wobei die Module 20 des Sensorteils 18 jeweils "auf dem Kopf" angeordnet sind. Demzufolge steht jedem Sendeelement 40 im Sensorteil 16 eine Empfangselement 42 im Sensorteil 18 gegenüber und umgekehrt.

Die Auswerteschaltkreise 44, 46, 48 sind in jedem Sensorteil 16, 18 über eine redundante Leitungsverbindung 50a, 50b zu einer Serienanordnung 52 von Auswerteschaltkreisen 44, 46, 48 gekoppelt. Die Leitungsverbindung 50a, 50b ist in einem bevorzugten Ausführungsbeispiel eine direkte Verbindung zwischen entsprechenden Eingängen und Ausgängen der Auswerteschaltkreise, auf der lediglich ein binäres Abschaltsignal (durch Wegfall eines definierten Freigabesignals) übertragen wird. Das binäre Abschaltsignal wird von dem jeweils letzten Auswerteschaltkreis 48, 48' in jedem Sensorteil 16, 18 an die Steuereinheit 26 übertragen. Die Steuereinheit 26 erzeugt in Abhängigkeit von den binären Abschaltsignalen der Sensorteile 16, 18 das redundante Freigabesignal an den Ausgängen OSSD1 und OSSD2.

Den Fachleuten auf diesem Gebiet ist schnell klar, dass das binäre Abschaltsignal auf der seriellen Verbindung 50 jeweils dann eine Abschaltanforderung signalisiert, wenn einer oder mehrere der Sendestrahlen 22, 24 zwischen den Sensorteilen 16, 18 unterbrochen sind. Für das Abschaltsignal auf der Verbindung 50 spielt es keine Rolle, welche der Sendestrahlen 22, 24 unterbrochen sind, um eine schnelle Systemreaktion zu ermöglichen. Die Reaktionszeit des Sensors 14 ist auch bei einer großen Anzahl von Sendestrahlen 22, 24 relativ kurz, weil die Auswerteschaltkreise 44, 46, 48 die angeschlossenen Empfangselemente 42 jeweils parallel auswerten.

In dem dargestellten Ausführungsbeispiel sind die Auswerteschaltkreise 44, 46, 48 in jedem Sensorteil 16, 18 außerdem noch parallel zueinander an eine Busverbindung angeschlossen, die hier aus einer Datenleitung 54 und einer Taktleitung 56 besteht. In einem bevorzugten Ausführungsbeispiel handelt es sich um eine I²C-Busverbindung, die eine sehr kostengünstige Realisierung ermöglicht. Prinzipiell könnte hier jedoch auch eine andere Busverbindung zur Anwendung kommen. Sämtliche Auswerteschaltkreise 44, 46, 48 sind über die Busverbindung 54, 56 mit der Steuereinheit 26 verbunden, so dass die Steuereinheit 26 letztlich über zwei verschiedene Kommunikationswege Informationen von den Auswerteschaltkreisen 44, 46, 48 erhält. In dem bevorzugten Ausführungsbeispiel werden über die Busverbindung 54, 56 Detailinformationen an die Steuereinheit 26 übertragen. Insbesondere melden die Auswerteschaltkreise 44, 46, 48 über die Busverbindung 54, 56, welche Sendestrahlen 22, 24 zu welchem Zeitpunkt und/oder in welcher Reihenfolge unterbrochen sind, wohingegen über die serielle Verbindung 50a, 50b nur gemeldet wird, dass Sendestrahlen 22, 24 unterbrochen sind. Durch die beiden verschiedenen und zueinander redundanten Kommunikationsverbindungen 50a, 50b und 54, 56 wird eine erhöhte Fehlersicherheit, eine kurze Reaktionszeit und eine detaillierte Auswertung der jeweils unterbrochenen Sendestrahlen 22, 24 ermöglicht.

In den bevorzugten Ausführungsbeispielen sind die Sendeelemente 40 in jedem Sensorteil Leuchtdioden, Laserdioden oder andere aktiv leuchtende Sendeelemente, die von den Auswerteschaltkreisen 44, 46, 48 jeweils so angesteuert werden, dass die Sendestrahlen 22, 24 moduliert sind, was bei der Bezugsziffer 58 symbolisch dargestellt ist. Die Modulation 58 der Sendestrahlen 22, 24 ist so gewählt, dass die einzelnen Sendestrahlen 22, 24 einen individuellen Code beinhalten, der von dem Auswerteschaltkreis 44, 46, 48 des jeweils anderen Sensorteils demoduliert und ausgewertet wird. Auf diese Weise kann einfallendes Fremdlicht, beispielsweise in Folge von Lichtreflexionen oder Sonneneinstrahlung, von dem echten Sendestrahl 22, 24 unterschieden werden. In einem bevorzugten Ausführungsbeispiel sind die Sendestrahlen 22, 24 mit einer Puls-Code-Modulation versehen, die auch zur Synchronisierung der einzelnen Module 20 verwendet wird. In dem bevorzugten Ausführungsbeispiel sind die Module 20 so konfiguriert, dass das letzte Modul in der Serienanordnung der Module des ersten Sensorteils 16 als erstes einen Sendestrahl 22 erzeugt, indem es das erste Sendeelement 40 mit dem entsprechenden Modulationscode 58 ansteuert. Der Auswerteschaltkreis 44 des Sensorteils 16 erwartet dann innerhalb einer definierten Zeitspanne einen Sendestrahl 24 an dem ersten Empfangselement 42. Der erwartete Sendestrahl 24 am Empfangselement 42 muss einen definierten Modulationscode beinhalten, damit der Auswerteschaltkreis 44 eine fehlerfreie Übertragung des eigenen Sendestrahls 22 erkennt. In einem bevorzugten Ausführungsbeispiel enthält der Modulationscode des "Antwort-Sendestrahls" 24 eine Modulation, die ein Quittungssignal bzw. eine Wiederholungsanforderung signalisiert, wobei letzteres immer dann gesendet wird, wenn der Auswerteschaltkreis 44' des zweiten Sensorteils 18 die empfangene Modulation 58 des ersten Sensorteils 16 nicht decodieren kann. Bei einer definierten Anzahl von "Fehlversuchen" erzeugen die Auswerteschaltkreise 44, 44' in den Sensorteilen 16, 18 das Abschaltsignal 50a, 50b. Wenn die Auswerteschaltkreise 44, 44' demgegenüber die jeweils empfangenen Sendestrahlen 22, 24 fehlerfrei decodieren konnten, werden sequentiell nacheinander die weiteren Sendestrahlen mit Hilfe der weiteren angekoppelten Sendeelemente erzeugt. Insgesamt wird so ein optisches Kommunikationsprotokoll zwischen den Sensorteilen 16, 18 realisiert, das insbesondere zur Synchronisierung der Sensorteile 16, 18 dient. Außerdem wird mit Hilfe des Quittungssignals eine hohe Zuverlässigkeit gegenüber Störungen durch Fremdlicht und/oder Interferenzen erreicht.

Des Weiteren ist es in diesem Ausführungsbeispiel bevorzugt, dass die Sendeleistung der aktiven Sendeelemente 40 mit Hilfe des optischen Kommunikationsprotokolls iterativ an eine optimale Sendeleistung angepasst wird. In einem Ausführungsbeispiel geschieht dies, indem der erste Sensorteil 16 den ersten Sendestrahl 20 zunächst mit einer sehr geringen Sendeleistung (Leistungsminimum) aussendet und die Sendeleistung schrittweise erhöht, bis der "zurückkommende" Sendestrahl 24 des zweiten Sensorteils 18 einen fehlerfreien Empfang des ausgesendeten Sendestrahls 22 signalisiert. In gleicher Weise wird auch die Sendeleistung der anderen Sendeelemente 40 in allen Modulen 20 schrittweise eingestellt. Alternativ kann die Einstellung der optimalen Sendeleistung auch vom Sendeleistungsmaximum der einzelnen Sendeelemente 40 aus erfolgen.

Fig. 3 zeigt ein weiteres Ausführungsbeispiel für den neuen Sensor, das insgesamt mit der Bezugsziffer 70 bezeichnet ist. Im Übrigen bezeichnen gleiche Bezugszeichen dieselben Elemente wie zuvor.

Bei dem Sensor 70 aus Fig. 3 ist die Steuereinheit in zwei räumlich getrennten Teilen 26a und 26b realisiert. Der Teil 26a arbeitet hier als Master-Kanal 34, der Teil 26b als Slave-Kanal 36. Der Teil 26a ist in den Sensorteil 16 integriert, der Teil 26b in den Sensorteil 18. Der Masterkanal 34 beginnt bei der Initialisierung die optische Kommunikation zwischen den Sensorteilen, d.h. der Sensorteil 16 mit dem Masterkanal sendet den ersten Sendestrahl 22 aus. Außerdem findet zwischen den beiden Kanälen 34, 36 ein direkter Informationsaustausch statt, weshalb jeder Kanal 34, 36 über einen Kommunikationsbaustein 72, 72' verfügt. Die Kommunikation zwischen den Kommunikationsbausteinen 72, 72' erfolgt in einem Ausführungsbeispiel mit Hilfe einer bidirektionalen Funkstrecke. Alternativ kann eine bidirektionale Infrarot- oder Kabelverbindung verwendet sein. In einem weiteren vorteilhaften Ausführungsbeispiel wird die optische Kommunikationsstrecke, die mit Hilfe der modulierten Sendestrahlen 22, 24 zwischen zwei gegenüberliegenden Modulen 20 besteht, auch für die Kommunikation zwischen den Kanälen 34, 36 verwendet.

Der Sensor 70 ist besonders vorteilhaft für einfache und kostenoptimierte Varianten. In vorteilhaften Ausführungsbeispielen sind die Prozessoren und anderen Bauelemente der Kanäle 34, 36 jeweils im Fuß der Sensorteile 16, 18 integriert. In einem anderen Ausführungsbeispiel sind die Kanäle 34, 36 als Steckmodule ausgebildet, die über geeignete Steckverbindungen mit den Modulen 20 zusammengesteckt werden, um die Sensorteile 16, 18 zu bilden. Jeder Kanal 34, 36 wertet die Auswerteschaltkreise 44, 46, 48 des zugehörigen Sensorteils alleine aus. Der Abgleich der Auswerteergebnisse erfolgt zwischen den Kanälen 34, 36 mit Hilfe der Kommunikationsverbindung 72, 72'. Jeder Kanal 34, 36 erzeugt ein Freigabesignal OSSD. Zusammen bilden die Freigabesignale OSSD das redundante Freigabesignal des Sensors 70. Wie bei dem Sensor 14 aus Fig. 2 können die Kanäle 34, 36 Eingänge 38, 38' für Starttaster, Not-Aus-Taster, Schützüberwachung (EDM) etc. besitzen.

Insgesamt beinhalten die Ausführungsbeispiele des neuen Sensors also eine Vielzahl kombinierter Sende- und Empfangsmodule, die mit Hilfe von gegenläufigen Sendestrahlen ein optisch überwachtes Schutzfeld bilden. Die Sende- und Empfangsmodule der einander gegenüberstehenden Sensorteile können mit Hilfe der Sendestrahlen optisch miteinander kommunizieren. Außerdem kommunizieren die Sende- und Empfangsmodule in jedem Sensorteil mit einer übergeordneten Steuereinheit. Jedes Modul enthält einen Auswerteschaltkreis, der die angeschlossenen Sende- und Empfangselemente weitgehend selbstständig verwaltet und mit den anderen Modulen kommuniziert. Vorteilhafterweise sind für die Kommunikation der Module untereinander und mit der übergeordneten Steuereinheit zwei verschiedene Busverbindungen vorgesehen, wobei ein serieller Bus im Wesentlichen das Abschaltsignal überträgt, während ein paralleler Datenbus diverse Detailinformationen überträgt.

## Patentansprüche

1. Optoelektronischer Sensor zum Absichern eines Gefahrenbereichs, insbesondere Lichtgitter, mit einem ersten und einem zweiten Sensorteil (16, 18), die mit einem räumlichen Abstand zueinander angeordnet sind, wobei jeder Sensorteil (16, 18) eine Vielzahl von Sendeelementen (40) zum Erzeugen von Sendestrahlen (22, 24) und eine Vielzahl von Empfangselementen (42) zum Empfangen der Sendestrahlen (22, 24) aufweist, so dass eine Vielzahl von gegenläufigen Sendestrahlen (22, 24) zwischen den Sensorteilen (16, 18) gebildet wird, wobei jeder Sensorteil (16, 18) zumindest einen Auswerteschaltkreis (44, 46, 48) aufweist, der mit den Empfangselementen (42) des jeweiligen Sensorteils (16, 18) gekoppelt ist, und wobei jeder Auswerteschaltkreis (44, 46, 48) dazu ausgebildet ist, ein Abschaltsignal (50a, 50b) in Abhängigkeit von den jeweils angekoppelten Empfangselementen (42) zu erzeugen, **gekennzeichnet durch** zumindest eine Steuereinheit (26; 26a, 26b), die mit den Auswerteschaltkreisen (44, 46, 48) gekoppelt ist, wobei die Steuereinheit (26; 26a, 26b) in Abhängigkeit von dem Abschaltsignal (50a, 50b) ein redundantes Freigabesignal (OSSD1, OSSD2) erzeugt, wobei jeder Sensorteil (16, 18) eine Vielzahl von Auswerteschaltkreisen (44, 46, 48) aufweist, wobei ein erster Auswerteschaltkreis (44) mit einer ersten Anzahl der Empfangselemente (42) gekoppelt ist, wobei ein weiterer Auswerteschaltkreis (46, 48) mit einer weiteren Anzahl der Empfangselemente (42) gekoppelt ist, wobei der erste und der weitere Auswerteschaltkreis (44, 46, 48) in jedem Sensorteil (16, 18) über eine erste Leitungsverbindung (50) miteinander gekoppelt sind, um eine Serienanordnung (52) von Auswerteschaltkreisen (44, 46, 48) zu bilden, wobei die Serienanordnung (52) einen Ausgang (50a, 50b) aufweist, von dem das Abschaltsignal in Abhängigkeit von allen Empfangselementen (42), die an die Serienanordnung (52) angekoppelt sind, an die Steuereinheit (26) übertragen wird, und wobei die Vielzahl der Auswerteschaltkreise (44, 46, 48) außerdem an eine gemeinsame Busdatenverbindung (54, 56) angeschlossen sind, die mit der Steuereinheit (26) verbunden ist.

2. Optoelektronischer Sensor nach Anspruch 1, **dadurch gekennzeichnet, dass** der zumindest eine Auswerteschaltkreis (44, 46, 48) in jedem Sensorteil (16, 18) ferner mit den Sendeelementen (40) des jeweiligen Sensorteils (16, 18) gekoppelt ist, um das Aussenden der Sendestrahlen (22, 24) zu steuern.

3. Optoelektronischer Sensor nach Anspruch 1 oder 2, **dadurch gekennzeichnet, dass** jeder Sensorteil (16, 18) dazu ausgebildet ist, modulierte Sendestrahlen (22, 24) zu erzeugen, wobei die modulierten Sendestrahlen (22, 24) eine optische Kommunikationsstrecke zur Synchronisation zwischen den Sensorteilen (16, 18) bilden.

4. Optoelektronischer Sensor nach einem der Ansprüche 1 bis 3, **dadurch gekennzeichnet, dass** jeder Sensorteil (16, 18) eine gerade Anzahl an Sendeelementen (40) und eine gerade Anzahl an Empfangselementen (42) aufweist, die abwechselnd nebeneinander angeordnet sind, wobei jedem Empfangselement (42) genau ein Sendelement (40) gegenüberliegt.

5. Optoelektronischer Sensor nach einem der Ansprüche 1 bis 4, **dadurch gekennzeichnet, dass** die Steuereinheit (26a, 26b) einen ersten und einen zweiten Kanal (34, 36) aufweist, wobei der erste Kanal (34) in dem ersten Sensorteil (16) angeordnet ist, und wobei der zweite Kanal (36) in dem zweiten Sensorteil (18) angeordnet ist.

6. Optoelektronischer Sensor nach einem der Ansprüche 1 bis 4, **dadurch gekennzeichnet, dass** die Steuereinheit (26) separat von dem ersten und dem zweiten Sensorteil (16, 18) angeordnet ist.

7. Optoelektronischer Sensor nach einem der Ansprüche 1 bis 6, **dadurch gekennzeichnet, dass** jeder Sensorteil (16, 18) dazu ausgebildet ist, die Sendestrahlen (22, 24) zumindest abschnittsweise sequentiell zu erzeugen.

8. Optoelektronischer Sensor nach einem der Ansprüche 1 bis 7, **dadurch gekennzeichnet, dass** jeder Sensorteil (16, 18) dazu ausgebildet ist, einen empfangenen Sendestrahl (22) mit Hilfe eines eigenen modulierten Sendestrahls (24) zu quittieren.

9. Optoelektronischer Sensor nach einem der Ansprüche 1 bis 8, **dadurch gekennzeichnet, dass** die Sendeelemente (40) eine variable Sendeleistung mit einem Leistungsminimum und einem Leistungsmaximum aufweisen, wobei jeder Sensorteil (16, 18) dazu ausgebildet ist, die Sendeleistung der Sendeelemente (40) schrittweise zwischen dem Leistungsminimum und dem Leistungsmaximum zu verändern.

## Claims

1. An optoelectronic sensor for safeguarding a hazardous area, in particular a light grating, comprising a first and a second sensor part (16, 18), which are arranged at a spatial distance from one another, wherein each sensor part (16, 18) has a plurality of transmitting elements (40) for generating transmitted beams (22, 24) and a plurality of receiving elements (42) for receiving the transmitted beams (22, 24), such that a plurality of transmitted beams (22, 24) in opposite directions are formed between the sensor parts (16, 18), wherein each sensor part (16, 18) has at least one evaluation circuit (44, 46, 48) which is coupled to the receiving elements (42) of the respective sensor part (16, 18), and wherein each evaluation circuit (44, 46, 48) is designed to generate a switch-off signal (50a, 50b) in a manner dependent on the respectively coupled receiving elements (42), **characterized by** at least one control unit (26; 26a, 26b) coupled to the evaluation circuits (44, 46, 48), wherein the control unit (26; 26a, 26b) generates a redundant enable signal (OSSD1, OSSD2) in a manner dependent on the switch-off signal (50a, 50b), wherein each sensor part (16, 18) has a plurality of evaluation circuits (44, 46, 48), wherein a first evaluation circuit (44) is coupled to a first number of the receiving elements (42), wherein a further evaluation circuit (46, 48) is coupled to a further number of the receiving elements (42), wherein the first and the further evaluation circuit (44, 46, 48) in each sensor part (16, 18) are coupled to one another via a first line connection (50) in order to form a series arrangement (52) of evaluation circuits (44, 46, 48), wherein the series arrangement (52) has an output (50a, 50b) from which the switch-off signal is transmitted to the control unit (26) in a manner dependent on all the receiving elements (42) coupled to the series arrangement (52), and wherein the plurality of evaluation circuits (44, 46, 48) are further connected to a common bus data connection (54, 56), which is connected to the control unit (26).

2. The optoelectronic sensor of claim 1, **characterized in that** the at least one evaluation circuit (44, 46, 48) in each sensor part (16, 18) is furthermore coupled to the transmitting elements (40) of the respective sensor part (16, 18) in order to control the emission of the transmitted beams (22, 24).

3. The optoelectronic sensor of claim 1 or 2, **characterized in that** each sensor part (16, 18) is designed to generate modulated transmitted beams (22, 24), wherein the modulated transmitted beams (22, 24) form an optical communication link for synchronization between the sensor parts (16, 18).

4. The optoelectronic sensor of any of claims 1 to 3, **characterized in that** each sensor part (16, 18) has an even number of transmitting elements (40) and an even number of receiving elements (42), with the transmitting elements and the receiving elements being arranged alternately alongside one another, and wherein each receiving element (42) faces exactly one transmitting element (40).

5. The optoelectronic sensor of any of claims 1 to 4, **characterized in that** the control unit (26a, 26b) has a first and a second channel (34, 36), wherein the first channel (34) is arranged in the first sensor part (16), and wherein the second channel (36) is arranged in the second sensor part (18).

6. The optoelectronic sensor of any of claims 1 to 4, **characterized in that** the control unit (26) is arranged separately from the first and the second sensor part (16, 18).

7. The optoelectronic sensor of any of claims 1 to 6, **characterized in that** each sensor part (16, 18) is designed to generate the transmitted beams (22, 24) sequentially at least in sections.

8. The optoelectronic sensor of any of claims 1 to 7, **characterized in that** each sensor part (16, 18) is designed to acknowledge a received transmitted beam (22) by means of a dedicated modulated transmitted beam (24).

9. The optoelectronic sensor of any of claims 1 to 8, **characterized in that** the transmitting elements (40) have a variable transmission power with a power minimum and a power maximum, wherein each sensor part (16, 18) is designed to alter the transmission power of the transmitting elements (40) in steps between the power minimum and the power maximum.

## Revendications

1. Capteur optoélectronique pour la protection d'une zone dangereuse, en particulier une grille lumineuse, comportant des première et seconde parties de capteur (16, 18) qui sont disposées à une certaine distance spatiale l'une de l'autre, dans lequel chaque partie de capteur (16, 18) comporte une pluralité d'éléments d'émission (40) pour générer des faisceaux d'émission (22, 24) et une pluralité d'éléments de réception (42) pour recevoir les faisceaux d'émission (22, 24), de manière à former une pluralité de faisceaux d'émission se propageant en sens inverse (22, 24) entre les parties de capteur (16, 15), dans lequel chaque partie de capteur (16, 18) comprend au moins un circuit d'évaluation (44, 46, 48) qui est couplé aux éléments de réception (42) de la partie de capteur respective (16, 18), et dans lequel chaque circuit d'évaluation (44, 46, 48) conçu pour générer un signal de déconnexion (50a, 50b) en fonction des éléments de réception respectivement couplés (42), **caractérisé par** au moins une unité de commande (26 ; 26a, 26b) qui est couplée aux circuits d'évaluation (44, 46, 48), dans lequel l'unité de commande (26 ; 26a, 26b) génère en fonction du signal de déconnexion (50a, 50b) un signal d'autorisation redondant (OSSD1, OSSD2), dans lequel chaque partie de capteur (16, 18) comporte une pluralité de circuits d'évaluation (44, 46, 48), dans lequel un premier circuit d'évaluation (44) est couplé à un premier nombre d'éléments de réception (42), dans lequel un autre circuit d'évaluation (46, 48) est couplé à un autre nombre d'éléments de réception (42), dans lequel (50) les premier et autre circuits d'évaluation (44, 46, 48), sont couplés l'un à l'autre dans chaque partie de capteur (16, 18) par l'intermédiaire d'une première liaison de connexion pour former un montage en série (52) de circuits d'évaluation (44, 46, 48) dans lequel le montage en série (52) comporte une sortie (50a, 50b) à partir de laquelle le signal de déconnexion est transmis à l'unité de commande (26) en fonction de tous les éléments de réception (42) qui sont couplés au montage en série (52), et dans lequel la pluralité de circuits d'évaluation (44, 46, 48) sont en outre reliés à une liaison de données de bus commune (54, 56) qui est reliée à l'unité de commande (26).

2. Capteur optoélectronique selon la revendication 1, **caractérisé en ce que** l'au moins un circuit d'évaluation (44, 46, 48) de chaque partie de capteur (16, 18) est en outre couplé aux éléments d'émission (40) de la partie de capteur respective (16, 18) pour commander l'émission des faisceaux d'émission (22, 24).

3. Capteur optoélectronique selon la revendication 1 ou 2, **caractérisé en ce que** chaque capteur (16, 18) est conçu pour générer des faisceaux d'émission modulés (22, 24), dans lequel les faisceaux d'émission modulés (22, 24) forment un trajet de communication optique pour la synchronisation entre les parties de capteur (16, 18).

4. Capteur optoélectronique selon l'une quelconque des revendications 1 à 3, **caractérisé en ce que** chaque capteur (16, 18) comporte un nombre pair d'éléments d'émission (40) et un nombre pair d'éléments de réception (42), qui sont alternativement disposés côte à côte, dans lequel exactement un élément d'émission (40) est opposé à chaque élément de réception (42).

5. Capteur optoélectronique selon l'une quelconque des revendications 1 à 4, **caractérisé en ce que** l'unité de commande (26a, 26b) comporte des premier et second canaux (34, 36), dans lequel le premier canal (34) est disposé dans la première partie de capteur (16) et dans lequel le second canal (36) est disposé dans la seconde partie de capteur (18).

6. Capteur optoélectronique selon l'une quelconque des revendications 1 à 4, **caractérisé en ce que** l'unité de commande (26) est disposée séparément des première et seconde parties de capteur (16, 18).

7. Capteur optoélectronique selon l'une quelconque des revendications 1 à 6, **caractérisé en ce que** chaque capteur (16, 18) est conçu pour générer les faisceaux d'émission (22, 24) de manière au moins partiellement séquentielle.

8. Capteur optoélectronique selon l'une quelconque des revendications 1 à 7, **caractérisé en ce que** chaque capteur (16, 18) est conçu pour confirmer un faisceau d'émission reçu (22) à l'aide d'un faisceau d'émission modulé propre (24).

9. Capteur optoélectronique selon l'une quelconque des revendications 1 à 8, **caractérisé en ce que** les éléments d'émission (40) ont une puissance d'émission variable avec un minimum de puissance et un maximum de puissance, dans lequel chaque partie de capteur (16, 18) est conçu pour modifier pas à pas la puissance d'émission des éléments d'émission (40) entre le minimum de puissance et le maximum de puissance.
